# FASCICULE DE BREVET EUROPEEN

(11) **EP 2 307 318 B1**
(45) Date de publication et mention de la délivrance du brevet: **19.09.2012**
(21) Numéro de dépôt: 09802501.8
(22) Date de dépôt: 27.07.2009
(51) Int. Cl.: C02F 1/24, C02F 1/28

(54) **PROCEDE DE TRAITEMENT D'UN LIQUIDE PAR FLOTTATION INDUITE PAR DES PARTICULES FLOTTANTES**
VERFAHREN ZUR BEARBEITUNG EINER FLÜSSIGKEIT DURCH MITTELS SCHWIMMENDER PARTIKEL HERBEIGEFÜHRTE FLOTATION
PROCESS FOR TREATING A LIQUID BY FLOTATION INDUCED BY FLOATING PARTICLES

(30) Priorité: 29.07.2008 FR 0855224
(43) Date de publication de la demande: 13.04.2011
(73) Titulaire: Veolia Water Solutions & Technologies Support, 94417 Saint-Maurice Cedex (FR)
(72) Inventeur: JEANMAIRE, Jean-Paul, F-78780 Maurecourt (FR); MARTEIL, Philippe, F-95450 Vigny (FR); BREANT, Philippe, F-78640 Neauphle Le Chateau (FR)
(74) Mandataire: Larcher, Dominique
(86) Numéro de dépôt international: PCT/EP2009/059680
(87) Numéro de publication internationale: WO 2010/012694

(56) Documents cités:
- DE-B1- 2 748 652
- FR-A- 2 250 565
- RUBIO ET AL: "Overview of flotation as a wastewater treatment technique" MINERALS ENGINEERING, vol. 15, no. 3, mars 2002 (2002-03), XP002520384

## Description

### Domaine de l'invention

Le domaine de l'invention est celui du traitement des eaux en vue de leur épuration ou de leur potabilisation. L'invention concerne plus particulièrement le traitement par flottation des eaux contenant des matières dissoutes et/ou en suspension.

### État de l'art antérieur

Les liquides ou eaux contaminés peuvent contenir des matières en suspension (particules, algues, bactéries, ...) et des matières dissoutes (matières organiques, micro polluants...). Il existe dans l'état de la technique plusieurs techniques de traitement des matières en suspension ayant pour objectif de diminuer le taux de ces contaminants.

Parmi ces techniques, on peut citer la décantation et la flottation.

La décantation est un procédé de séparation qui s'applique à des particules dont la masse volumique est supérieure à celle du liquide qui les contient tandis que la flottation est un procédé de séparation qui s'applique à des particules dont la masse volumique est inférieure à celle du liquide qui les contient.

Le traitement des eaux par flottation présente de nombreux avantages par rapport au traitement par décantation.

Un premier avantage est que la vitesse de traitement d'une eau par flottation est supérieure à la vitesse de traitement par décantation classique.

Un autre avantage est que le traitement par flottation permet d'atteindre une meilleure élimination des algues par rapport au traitement par décantation pour un débit d'eau à traiter supérieur.

La qualité bactériologique d'une eau traitée par flottation est supérieure à celle obtenue par décantation. La qualité bactériologique est liée quant à elle à la présence de microorganismes (bactéries, virus, parasites). Ainsi le traitement par flottation conduit à un meilleur abattement des microorganismes (Cryptosporidie, Giardia) par rapport au traitement par décantation.

Par ailleurs, un autre avantage du traitement par flottation est lié au fait qu'il permet de réduire le volume de boues produit.

Parmi les processus de flottation, on distingue:
- la flottation naturelle, où la différence de masse volumique entre la matière en suspension et l'eau qui la contient est naturellement suffisante pour permettre leur séparation (la matière flotte à la surface de l'eau);
- la flottation assistée qui consiste à mettre en oeuvre une insufflation de bulles d'air au sein de la masse de liquide pour améliorer la séparation des particules naturellement flottables ;
- la flottation provoquée où la masse volumique de la matière en suspension est au départ supérieure à celle de l'eau qui la contient et est artificiellement réduite grâce à des bulles de gaz. En effet, certaines particules solides ou liquides peuvent s'unir à des bulles de gaz pour former des attelages « particule-bulle » moins dense que l'eau qui les contient.

La flottation à air dissous (FAD) est un processus de flottation provoquée qui utilise des bulles très fines ou microbulles de 40 à 70 microns de diamètre. Elle comporte généralement une association de différentes étapes :
- une coagulation afin de neutraliser les charges de surface des colloïdes, et l'adsorption des matières dissoutes ;
- une floculation, à l'aide d'un matériau polymère floculant permettant l'agglomération des particules ;
- une injection d'eau pressurisée permettant la mise en contact des microbulles et de l'eau floculée ;
- une séparation permettant la séparation du floc et du liquide clarifié;
- une collecte du liquide clarifié ;
- une collecte des « boues »flottées.

La technique FAD s'applique traditionnellement à des eaux de bonne qualité et faiblement minéralisées, aux eaux froides et peu chargées en matières en suspension, et tout particulièrement aux eaux de retenues riches en algues. Cette technique est éprouvée de longue date et est constamment améliorée.

Parmi les nombreuses améliorations qui ont été réalisées, on peut citer:
- la FFAD (Filtration/Flottation à Air Dissous), qui combine la technique de FAD à une filtration sur matériau granulaire ;
- l'Ozoflottation, une technique développée par le groupe Veolia, qui utilise des bulles d'air ozoné. L'ozone est avantageusement utilisé pour la désinfection (c'est à dire la destruction des micro-organismes), l'élimination des odeurs, des substances chimiques et d'autres polluants (fer, manganèse, pesticides) présents dans les eaux à traiter;
- la flottation turbulente (brevet US 5 516 433) qui met en oeuvre, à la base de la zone de flottation, des éléments de contrôle et de répartition de débit permettant d'obtenir un régime hydraulique stable.

Cependant, malgré ces différentes améliorations, la technologie du traitement par flottation présente encore un certain nombre d'inconvénients.

Les procédés de FFAD, d'ozoflottation et de flottation turbulente ont en commun six inconvénients :
- la vitesse de flottation est limitée par la fine taille des bulles;
- le rendement de l'élimination des particules et des matières coagulées ne permet pas d'atteindre directement la qualité de l'eau exigée en sortie de filière ;
- la complexité du procédé faisant appel à beaucoup de mécanique (saturateur d'air, pompe de recirculation, racleur) ;
- le coût de la pressurisation nécessaire pour produire l'eau blanche recirculée est estimé à 40% du coût de fonctionnement ;
- leur application limitée à des ressources en eau de bonne qualité et faiblement minéralisées, aux eaux froides et peu chargées en matières en suspension, et tout particulièrement aux eaux de retenues riches en algues ;
- une partie non négligeable du matériau polymère floculant injectés dans les eaux ne participe pas à la formation des flocs et reste dissoute dans les eaux, provoquant ainsi une accélération du colmatages de filtres placés en aval.

En outre l'introduction d'air est un inconvénient majeur limitant la vitesse de filtration dans les ouvrages couplés à un filtre du type FFAD. En effet, une vitesse excessive conduit rapidement à l'embolie gazeuse du filtre associé, et même dans le cas où la filtration est séparée de la flottation dans une deuxième étape du prétraitement de l'eau, l'embolie gazeuse est à craindre.

Une partie de ces inconvénients est éliminée par l'utilisation de technique de flottation induite par des particules flottantes. Un tel procédé est décrit dans le document de brevet US 6 890 431 B1 qui prévoit l'utilisation de particules flottantes solides dans un processus de flottation et une recirculation desdites particules dans le système de flottation après lavage.

Plus précisément, US 6 890 431 B1 divulgue un procédé et un système pour la clarification de fluide, l'installation en question comprenant :
- une chambre de mixage pour mélanger le fluide avec un coagulant;
- une chambre de floculation communiquant avec la chambre de mixage et où un réactif floculant et un média flottant est mélangé au mélange fluide-coagulant obtenu dans la chambre de mixage ;
- une chambre de flottation, communiquant avec la chambre de floculation et où une boue incluant le média flottant associé à une partie des matières en suspension à éliminer est séparé du liquide clarifié ;
- une unité de réhabilitation du média flottant, communiquant avec la chambre de flottation et avec la chambre de floculation et où le média flottant est lavé des matières en suspension qui lui sont associées ;
- une ligne de recyclage pour recycler le média flottant lavé dans la chambre de floculation.

Le brevet DE2748652B1 décrit un autre procédé de traitement d'un liquide par flottation induite par des particules flottantes réalisés en un matériau polymérique comprenant une étape de mélange et ajout des particules flottantes, une étape de flottation sans adjonction de gaz et une étape de séparation suivies des étapes de nettoyage et recyclage des particules flottantes. Les particules flottantes peuvent être traités pour les rendre hydrophobes.

Toutefois, un inconvénient de ce type de technique consiste dans le fait qu'une partie du matériau floculant reste dissoute dans l'eau et est susceptible de colmater les ouvrages de filtration disposé en aval. De plus, le coût de ce polymère perdu, augmente le coût de mise en oeuvre d'une telle technique.

### Objectifs de l'invention

L'objectif de l'invention est d'améliorer un tel procédé de traitement des eaux par flottation à l'aide de particules flottantes de l'art antérieur.

L'invention a notamment pour objectif de proposer un procédé de traitement des eaux dont le rendement épuratoire peut-être supérieur.

L'invention a aussi pour objectif de proposer un procédé et un dispositif de traitement permettant, en cas de besoin, de mieux cibler la pollution à abattre.

### Résumé de l'invention

Ces différents objectifs sont atteints grâce à l'invention qui concerne un procédé de traitement d'un liquide par flottation induite par des particules flottantes comprenant une étape de mélange au cours de laquelle lesdites particules flottantes sont ajoutées audit liquide, une étape de flottation au cours de laquelle lesdites particules flottantes remontent à la surface du liquide, et une étape de séparation desdites particules flottantes ainsi remontées à la surface du liquide traité,
ledit procédé étant caractérisé en ce qu'au moins certaines desdites particules flottantes présentent au moins un matériau polymère floculant fixé sur tout ou partie de leur surface, ledit procédé n'incluant par ailleurs aucune étape d'adjonction de gaz et aucune étape d'adjonction d'un matériau floculant libre non fixé auxdites particules.

Selon une telle technique la flottation se fait non pas au moyen de bulles d'air, mais au moyen de particules solides flottantes. On notera que l'on entend dans la présente description l'expression particules flottantes comme désignant des particules de densité réelle inférieure à 1.

Selon l'invention, les particules flottantes servent aussi de support à un matériau polymère floculant.

Les particules ainsi revêtues de matériau polymère floculant seront réalisées préalablement.

Ceci permet avantageusement de s'affranchir de la mise en oeuvre d'agent floculant libre en dispersion dans le liquide à traiter ou en cours de traitement. Ceci permet aussi de réduire la quantité de floculant nécessaire à la mise en oeuvre du procédé et donc de réduire le coût de celui-ci.

Un autre avantage procuré par l'invention consiste dans le fait que lorsque le procédé est suivi d'une étape de filtration granulaire ou membranaire sur un ou plusieurs ouvrages de filtration, l'absence de résiduel de réactif floculant libre dans le liquide arrivant dans ces ouvrages permet de diminuer la vitesse de colmatage de ceux-ci.

Préférentiellement, ledit matériau polymère floculant est un polymère ionique. De façon préférée entre toutes il s'agit d'un polymère cationique ou anionique faible.

Selon une variante intéressante de l'invention, au moins un matériau autre que ledit matériau polymère floculant est également fixé auxdites particules flottantes. Il pourra notamment s'agir d'un matériau adsorbant, tel que du charbon actif en poudre, et/ou d'un matériau présente des groupements chimiques ou biologiques dédiées à l'élimination de certains polluants spécifiques dudit liquide à traiter.

On notera que ce matériau autre que le matériau polymère pourra aussi, selon une autre variante, éventuellement complémentaire à celle selon le paragraphe précédent, être ajouté au liquide sous forme libre, c'est-à-dire non fixé sur les particules flottantes. Ce matériau autre pourra le cas échéant être recyclé.

Selon la variante selon laquelle au moins un matériau autre que ledit matériau polymère floculant est également fixé auxdites particules flottantes, lesdits groupements chimiques et molécules biologiques pourront être déterminés en fonction de la nature du liquide à traiter et de la nature de la ou des pollution(s) ciblée(s) à abattre dans celui-ci.

Lesdits groupements chimiques seront préférentiellement choisis dans le groupe constitué par des groupements hydroxyle, aldéhyde, carbinyle, carboxyle, amino, amido, sulfhydryle, ester, phospho, méthyle, phényle.

Lesdites molécules biologiques seront quant à elles préférentiellement choisies dans le groupe constitué par des polypeptides et des acides nucléiques.

Les particules flottantes utilisées pourront être réalisées en un matériau polymérique préférentiellement choisi dans le groupe constitué par les polystyrènes, les polyuréthanes, les polyéthylènes, les polyamides. Préférentiellement, lesdites particules flottantes seront constituées par des billes de polystyrène présentant un diamètre comprise entre 100 et 1500 µm.

Elles pourront aussi être réalisées en un matériau non polymérique présentant une densité supérieure à 1 et préférentiellement choisi dans le groupe constitué par le verre, les céramiques et les métaux, mais réalisées sous forme creuse délimitant un volume fermé contenant de l'air de façon telle que leur densité soit inférieure à 1.

Lorsque le matériau constituant les particules sera hydrophobe, le matériau polymérique floculant sera préférentiellement hydrophile de façon à rendre les particules flottantes elles-mêmes hydrophiles.

Selon une variante, ledit matériau polymère floculant et/ou ledit autre matériau se présentera sous la forme d'un enrobage autour desdites particules flottantes. On entend par enrobage une coopération ne mettant pas en oeuvre de liaison covalente entre le matériau polymère floculant et/ou ledit autre matériau d'une part et le matériau constituant lesdites particules flottantes.

Selon une autre variante, réalisable lorsque lesdites particules seront réalisées en un matériau synthétique, ledit matériau polymère floculant et/ou ledit autre matériau pourra aussi être greffé sur ledit matériau synthétique constituant lesdites particules flottantes. Dans ce cas, une réaction chimique sera mise en oeuvre au cours de la fabrication des particules flottantes de façon à établir des liaisons covalentes entre le polymère constituant la particule et le matériau polymère floculant et/ou ledit autre matériau.

Avantageusement, le procédé comprendra une étape de recyclage des particules flottantes.

Dans ce cas, le procédé comprendra avantageusement une étape de nettoyage des particules flottantes mise en oeuvre avant ladite étape de recyclage. Une telle étape, qui pourra être pratiquée selon différentes techniques connues de l'homme de l'art, par exemple par hydrocyclonage, aura vocation a débarrasser les particules de boues agglomérées autour d'elles grâce au matériau polymère floculant fixé sur ces particules. Dans ce cas, le matériau floculant restera, dans la majorité des cas, fixé aux particules même dans le cas d'un simple enrobage.

Grâce à un tel procédé, les particules flottantes fonctionnalisées par fixation à leur surface d'un matériau floculant et le cas échéant d'un autre matériau adsorbant et/ou dédié à une pollution spécifique sont mises en contact avec le liquide à traiter de manière à obtenir une fixation optimale de la pollution. Le mélange obtenu est envoyé dans une zone de flottation/séparation où les particules flottantes se rassemblent en surface emmenant avec elles au moins une partie de la pollution et où l'eau traitée est collectée en partie basse.

### Description détaillée d'un mode de réalisation de l'invention

L'invention, ainsi que les différents avantages qu'elle présente, seront plus facilement compris grâce à la description qui va suivre d'une mode non limitatif de réalisation de celle-ci donné en référence à la figure unique.

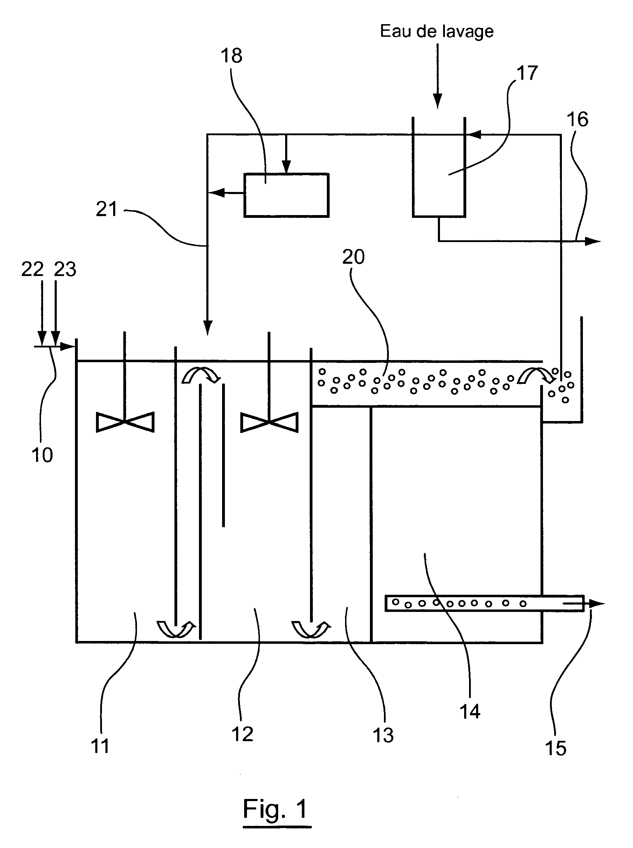

En se référant à la figure 1, une installation pour la mise en oeuvre du procédé selon l'invention comprend :
- une zone de coagulation sous conditions agitées ou turbulente (11), pouvant par exemple être créées par un agitateur ou un mélangeur statique ;
- une zone de mélange (12) agitée;
- une zone de flottation/séparation (13/14), qui est en communication avec la zone de mélange par une sousverse et qui comprend des moyens d'extraction de l'eau traitée (15) et des flottants (20);
- une zone de nettoyage (17) qui peut par exemple être, un réacteur fortement agité ou un appareil de nettoyage à injection d'eau (hydrocyclone, tamis vibrant, centrifugeuse aux parois perforées, réacteur fortement agité ou autres appareils de séparation équipé d'une injection d'eau à débit faible pour limiter la dilution de la boue) ;
- une zone de régénération (18) d'au moins une partie des particules flottantes fonctionnalisées nettoyées.

En se référant à cette figure 1, le procédé selon la présente invention consiste à introduire dans une zone de coagulation agitée (11) une eau brute (10) dans laquelle ont préalablement été injectés un coagulant (22) et éventuellement divers autres additifs (23) tels que du charbon actif en poudre, des résines ou autres peuvent être mélangés auxdites particules pour augmenter l'efficacité du traitement.

L'eau floculée est ensuite acheminée vers une zone de mélange (12), qui peut par exemple loger un Turbomix ®, installation décrite dans la demande de brevet FR2863908, dans laquelle des particules flottantes revêtues à leur surface d'un matériau polymère floculant sont mises en contact avec le liquide à traiter de manière à obtenir une fixation optimale de la pollution. Aucun agent floculant libre, c'est-à-dire non fixé aux particules flottantes, n'est introduit dans l'installation.

Le mélange provenant de cette zone de mélange est ensuite introduit dans une zone de flottation/séparation (13/14) au moyen d'une sousverse, où il va subir spontanément une séparation entre les particules flottantes fonctionnalisées qui remontent en surface à l'intérieur de la zone de flottation/séparation (13/14) en amenant avec elles une partie de la pollution initialement contenue dans l'eau et l'eau traitée en partie basse de la zone de flottation (13).

L'eau est extraite en partie basse (15) alors que les flottants, constitués par les particules flottantes et les boues agglomérées sur celles-ci, restées à la surface, sont extraits en partie haute.

Les particules flottantes (20) sont envoyées dans une zone de nettoyage (17) où elles sont lavées des boues déposées à leur surface. Le lavage des particules flottantes peut consister à les placer dans un réacteur fortement agité ou dans des appareils de nettoyage à injection d'eau et peut être obtenu par divers procédés (hydrocyclone, tamis vibrant, centrifugeuse aux parois perforées, réacteur fortement agité ou autres appareils de séparation équipé d'une injection d'eau à débit faible pour limiter la dilution de la boue).

Les boues (16) sont extraites de la zone de nettoyage (17), et les particules flottantes sont recyclées (21) dans la zone de mélange (12). Une partie de ces particules est régénérée (18) de façon à retrouver leurs propriétés originelles.

Dans le cas où des additifs sont ajoutés pour améliorer l'efficacité du traitement, lesdits additifs sont aussi récupérés et recyclés.

Des essais ont été menés sur de l'eau de Seine avec des particules se présentant sous la forme de billes de polystyrène de diamètres compris entre 500 et 800 µm enrobées de différents polymères floculants hydrophiles.

Ces particules ont été obtenues en mélangeant les billes de polystyrène à une solution de polymère floculant hydrophile préparée à une concentration de 0,1 à 1 g/L.

L'eau à traiter (de l'eau de Seine dont la turbidité a été mesurée) et coagulée par ajout d'une dose variant de 15 ppm à 60 ppm d'un coagulant classique (du WAC HB) sous agitation dans un petit (2,5 L) réacteur Turbomix muni d'un guide flux et d'un agitateur ;
- au bout de 1 à 2 minutes d'agitation, les particules flottantes enrobées de polymère ont été ajoutées dans le Turbomix à raison de moins de 10% du volume intérieur de celui-ci et laissées dans le flux de recirculation pendant moins d'une minute et ce sans ajout d'aucun agent floculant libre ;
- la turbidité de l'eau, a été mesurée, une dizaine de secondes après arrêt de l'agitation.

Une première série d'essai a été menée sans ajout de matériau adsorbant ou dédié au traitement d'un type de pollution donnée sous forme libre.

Les résultats obtenus avec les différents types de polymères testés sont présentés dans le tableau 1 suivant:

**Tableau 1**

| WAC HB | Polymère | | | | Turbidité (NTU) | | |
|---|---|---|---|---|---|---|---|
| Taux (ppm) | Apellation commerciale | Ionicité | Poids Moléculaire | Taux (ppm) | Eau Brute | Eau traitée | Abattement (%) |
| 15 | FA920 | Non ionique | Haut | 0,6 à 25 | 40 | 4 | 90 |
| 50 | AN905SEP | Anionique très faible | Haut | 3 | 70 | 1,8 | 97 |
| 30 | AN910VHM | Anionique faible | Très Haut | 2 | 26 | 1,3 | 95 |
| 30 | AN934SEP | Anionique moyen | Haut | 2 | 26 | 3,5 | 87 |
| 60 | AN956SEP | anionique fort | Haut | 2 | 85 | 32 | 62 |
| 30 | FO4190VHM | cationique faible | Très Haut | 1 | 31 | 0,64 | 98 |
| 30 | FO4190 | cationique faible | Haut | 2 | 31 | 0,7 | 98 |
| 30 | FO4490 | Cationique moyen | Haut | 2 | 31 | 2 | 94 |
| 30 | FO4650 | Cationique fort | Haut | 2 | 31 | 2,9 | 91 |

Chacun des polymères utilisés a été fabriqué par SNF Floerger.

Les résultats d'abattement de la turbidité indiqués dans ce tableau, traduisant l'abattement de la pollution, démontrent l'efficacité du procédé selon la présente invention tout particulièrement lorsque le polymère floculant est constitué par un polymère cationique ou anionique faible.

Une seconde série d'essais a ensuite été effectuée avec le même appareillage et suivant un protocole identique à celui décrit ci-dessus sauf en ce que du charbon actif a été en plus mis en oeuvre, en introduisant celui-ci en même temps que l'agent coagulant.

Les résultats obtenus en mettant en oeuvre des doses de CAP couramment utilisées en traitement de l'eau (10 ppm et 20 ppm) sont présentés dans le tableau 2 suivant :

| | | | | | |
|---|---|---|---|---|---|
| WACHB | CAP | F04190 | Turbidité | | |

| Taux (ppm) | Taux (ppm) | Taux (ppm) | Eau Brute (NTU) | Eau traitée (NTU) | Abattement (%) |
|---|---|---|---|---|---|
| 30 | 10 | 2 | 19 | 0,54 | 97 |
| 30 | 20 | 2 | 19 | 0,57 | 97 |

Selon ces résultats, les turbidités obtenues (de l'ordre de 0.5 NTU), ainsi que les rendements d'abattement (97%) de la turbidité confirment l'efficacité du procédé selon l'invention dans sa variante couplant la flottation à particules flottantes fonctionnaliés par un polymère floculant avec un adsorbant (CAP).

## Revendications

1. Procédé de traitement d'un liquide par flottation induite par des particules flottantes comprenant une étape de mélange au cours de laquelle lesdites particules flottantes sont ajoutées audit liquide, une étape de flottation au cours de laquelle lesdites particules flottantes remontent à la surface du liquide, et une étape de séparation desdites particules flottantes ainsi remontées à la surface du liquide traité,
ledit procédé étant **caractérisé en ce qu'**au moins certaines desdites particules flottantes présentent au moins un matériau polymère floculant fixé sur tout ou partie de leur surface, ledit procédé n'incluant par ailleurs aucune étape d'adjonction de gaz et aucune étape d'adjonction d'un matériau floculant libre non fixé auxdites particules.

2. Procédé selon la revendication 1 **caractérisé en ce que** ledit matériau polymère floculant est un polymère cationique ou anionique faible.

3. Procédé selon la revendication 1 ou 2 **caractérisé en ce qu'**au moins un matériau autre que ledit matériau polymère floculant est également fixé auxdites particules.

4. Procédé selon la revendication 3 **caractérisé en ce que** ledit matériau autre est un matériau adsorbant.

5. Procédé selon la revendication 3 **caractérisé en ce que** ledit matériau autre présente des groupements chimiques ou biologiques dédiés à l'élimination de certains polluants spécifiques dudit liquide à traiter.

6. Procédé selon la revendication 5, **caractérisé en ce que** lesdits groupements chimiques sont choisis dans le groupe constitué par des groupements hydroxyle, aldéhyde, carbinyle, carboxyle, amino, amido, sulfhydryle, ester, phospho, méthyle, phényle.

7. Procédé selon la revendication 5, **caractérisé en ce que** lesdites molécules biologiques sont choisies dans le groupe constitué par des polypeptides et des acides nucléiques.

8. Procédé selon l'une quelconque des revendications précédentes **caractérisé en ce que** lesdites particules flottantes sont réalisées en un matériau polymérique choisi dans le groupe constitué par les polystyrènes, les polyuréthanes, les polyéthylènes, les polyamides.

9. Procédé selon la revendication 8 **caractérisé en ce que** lesdites particules flottantes sont constituées par des billes de polystyrène présentant un diamètre comprise en 100 et 1500 µm.

10. Procédé selon l'une quelconque des revendications 1 à 7 **caractérisé en ce que** lesdites particules flottantes sont creuses et en un matériau choisi dans le groupe constitué par le verre, les céramiques et les métaux.

11. Procédé selon l'une quelconque des revendications 1 à 10 **caractérisé en ce que** ledit matériau polymère floculant et/ou ledit autre matériau se présente sous la forme d'un enrobage autour desdites particules flottantes.

12. Procédé selon la revendication 8 ou 9 **caractérisé en ce que** ledit matériau polymère floculant et/ou ledit autre matériau est greffé sur ledit matériau synthétique constituant lesdites particules flottantes.

13. Procédé selon l'une quelconque des revendications 1 à 12 **caractérisé en ce qu'**il comprend une étape de recyclage des particules flottantes.

14. Procédé selon la revendication 13 **caractérisé en ce qu'**il comprend une étape de nettoyage des particules flottantes mise en oeuvre avant ladite étape de recyclage.

## Claims

1. A method of treating a liquid by flotation induced by floating particles, comprising a mixing step during which said floating particles are added to said liquid, a flotation step during which said floating particles rise to the surface of the liquid, and a separation step for said particles having thus risen to the surface of the liquid being treated,
said method being **characterised in that** at least some of said floating particles have at least one flocculent polymeric material attached to all or part of their surface, said method moreover not including any step of adding gas or any step of adding a free flocculent material unattached to said particles.

2. The method according to claim 1, **characterised in that** said flocculent polymeric material is a weak cationic or anionic polymer.

3. The method according to claim 1 or 2, **characterised in that** at least one material other than said flocculent polymeric material is also attached to said particles.

4. The method according to claim 3, **characterised in that** said other material is an adsorbent material.

5. The method according to claim 3, **characterised in that** said other material exhibits chemical or biological groupings dedicated to removing certain specific pollutants from said liquid to be treated.

6. The method according to claim 5, **characterised in that** said chemical groupings are selected from the group comprising hydroxyl, aldehyde, carbinyl, carboxyl, amino, amido, sulfhydryl, ester, phospho, methyl and phenyl groupings.

7. The method according to claim 5, **characterised in that** said biological molecules are selected from the group comprising polypeptides and nucleic acids.

8. The method according to any one of the preceding claims, **characterised in that** said floating particles are made from a polymeric material selected from the group comprising polystyrenes, polyurethanes, polyethylenes and polyamides.

9. The method according to claim 8, **characterised in that** said floating particles comprise polystyrene beads having a diameter of 100 to 1500 µm.

10. The method according to any one of claims 1 to 7, **characterised in that** said floating particles are hollow and made of a material selected from the group comprising glass, ceramics and metals.

11. The method according to any one of claims 1 to 10, **characterised in that** said flocculent polymeric material and/or said other material is in the form of a coating around said floating particles.

12. The method according to claim 8 or 9, **characterised in that** said flocculent polymeric material and/or said other material is grafted on to said synthetic material constituting said floating particles.

13. The method according to any one of claims 1 to 12, **characterised in that** it comprises a step of recycling the floating particles.

14. The method according to claim 13, **characterised in that** it comprises a step of cleaning the floating particles implemented before said recycling step.

## Patentansprüche

1. Verfahren zur Bearbeitung einer Flüssigkeit durch mittels schwebender Partikel herbeigeführte Flotation, welches umfasst: einen Schritt des Mischens, in dessen Verlauf die schwebenden Partikel zu der Flüssigkeit zugegeben werden, einen Schritt der Flotation, in dessen Verlauf die schwebenden Partikel wieder an die Oberfläche der Flüssigkeit aufsteigen, und einen Schritt der Trennung der somit wieder an die Oberfläche aufgestiegenen Partikel von der bearbeiteten Flüssigkeit,
wobei das Verfahren **dadurch gekennzeichnet ist, dass** wenigstens gewisse der schwebenden Partikel mindestens ein polymeres Flockungsmaterial aufweisen, das an ihrer gesamten Oberfläche oder einem Teil derselben fixiert ist, wobei das Verfahren ansonsten keinen Schritt des Zusetzens von Gas und keinen Schritt des Zusetzens eines freien, nicht an den Partikeln fixierten Flockungsmaterials enthält.

2. Verfahren nach Anspruch 1, **dadurch gekennzeichnet, dass** das polymere Flockungsmaterial ein schwach kationisches oder anionisches Polymer ist.

3. Verfahren nach Anspruch 1 oder 2, **dadurch gekennzeichnet, dass** mindestens ein anderes Material als das polymere Flockungsmaterial ebenfalls an den Partikeln fixiert ist.

4. Verfahren nach Anspruch 3, **dadurch gekennzeichnet, dass** das andere Material ein adsorbierendes Material ist.

5. Verfahren nach Anspruch 3, **dadurch gekennzeichnet, dass** das andere Material chemische oder biologische Gruppen aufweist, die zur Beseitigung gewisser spezieller Schadstoffe der zu bearbeitenden Flüssigkeit bestimmt sind.

6. Verfahren nach Anspruch 5, **dadurch gekennzeichnet, dass** die chemischen Gruppen aus der Gruppe ausgewählt sind, welche aus Hydroxyl-, Aldehyd-, Carbinyl-, Carboxyl-, Amino-, Amido-, Sulfhydryl-, Ester-, Phospho-, Methyl-, Phenylgruppen besteht.

7. Verfahren nach Anspruch 5, **dadurch gekennzeichnet, dass** die biologischen Moleküle aus der Gruppe ausgewählt sind, welche aus Polypeptiden und Nukleinsäuren besteht.

8. Verfahren nach einem der vorhergehenden Ansprüche, **dadurch gekennzeichnet, dass** die schwebenden Partikel aus einem Polymermaterial hergestellt sind, das aus der Gruppe ausgewählt ist, welche aus den Polystyrolen, des Polyurethanen, den Polyethylenen und den Polyamiden besteht.

9. Verfahren nach Anspruch 8, **dadurch gekennzeichnet, dass** die schwebenden Partikel aus Polystyrolkugeln bestehen, die einen Durchmesser zwischen 100 und 1500 µm aufweisen.

10. Verfahren nach einem der Ansprüche 1 bis 7, **dadurch gekennzeichnet, dass** die schwebenden Partikel hohl sind und aus einem Material hergestellt sind, das aus der Gruppe bestehend aus Glas, Keramiken und Metallen ausgewählt ist.

11. Verfahren nach einem der Ansprüche 1 bis 10, **dadurch gekennzeichnet, dass** das polymere Flockungsmaterial und/oder das andere Material in der Form einer Ummantelung der schwebenden Partikel vorliegt.

12. Verfahren nach Anspruch 8 oder 9, **dadurch gekennzeichnet, dass** das polymere Flockungsmaterial und/oder das andere Material auf den Kunststoff aufgepfropft ist, aus dem die schwebenden Partikel bestehen.

13. Verfahren nach einem der Ansprüche 1 bis 12, **dadurch gekennzeichnet, dass** es einen Schritt des Wiederverwertens der schwebenden Partikel umfasst.

14. Verfahren nach Anspruch 13, **dadurch gekennzeichnet, dass** es einen Schritt der Reinigens der schwebenden Partikel umfasst, der vor dem Schritt des Wiederverwertens durchgeführt wird.
